# EUROPEAN PATENT SPECIFICATION

(11) **EP 1 685 698 B1**
(45) Date of publication and mention of the grant of the patent: **10.12.2008**
(21) Application number: 04753406.0
(22) Date of filing: 27.05.2004
(51) Int. Cl.: H04M 19/04, H04M 1/725

(54) **SHUFFLE-PLAY OF MULTI-MEDIA EVENTS IN A WIRELESS COMMUNICATIONS DEVICE**
ZUFÄLLIGE WIEDERGABE VON MULTIMEDIALEN EREIGNISSEN IN EINEM DRAHTLOSEN KOMMUNIKATIONSGERÄT
LECTURE ALEATOIRE D'EVENEMENTS MULTIMEDIA DANS UN DISPOSITIF DE COMMUNICATION SANS FIL

(30) Priority: 18.11.2003 US 716212
(43) Date of publication of application: 02.08.2006
(73) Proprietor: Sony Ericsson Mobile Communications AB, 221 88 Lund (SE)
(72) Inventor: SNYDER, Thomas, Cary, NC 27511 (US)
(74) Representative: HOFFMANN EITLE
(86) International application number: PCT/US2004/016575
(87) International publication number: WO 2005/057901

(56) References cited:
- WO-A-02/37369
- WO-A-02/067565
- WO-A-02/087209
- GB-A- 2 346 035
- US-A1- 2002 106 074

## Description

The present invention relates generally to a wireless communications device and to a method of selecting a multi-media effect for a wireless communications device.

Consumers often seek innovative features and new functionality when deciding on whether to purchase a wireless communications device. One especially popular feature allows a user to assign a melodic ring tone to a specific remote party's terminal. Upon receiving an incoming call, the user can identify the caller simply by listening to the ring tone. Also popular is the ability to play games, view images, video, and define various vibration and lighting patterns.

Of course, consumer interest in what was once new and innovative often wanes quickly. Thus, manufacturers and service providers sometimes struggle to keep abreast of consumer demand. Those that cannot get new features to market fast enough may find themselves losing market share. On the other hand, those that do may fail to realize sufficient capital to justify their investment in developing the functionality. Therefore, manufacturers and service providers would benefit if they could offer new and innovative features, functionality, and services based on existing infrastructure. Not only would this allow these entities to get features to market faster and cheaper, it would prolong an existing revenue stream as well as create the potential for new revenue streams.

WO 02/087209 discloses a method and apparatus that permits a user to predefine certain ring tones to be rendered to alert the user of an incoming call. The ring tones may be stored either in the user's telephone or at a network server and downloaded to the user's device. A selection, resident in the user's telephone or at the server, performs the ring tone selection based on at least a portion of a calling party number. With the '209 method, the ring tone is not sent/received along with an indication of a predetermined event. Instead, ring tone selection occurs after the user receives the incoming call.

The present invention is defined in claim 1, 19 and claim 22, respectively. Advantageous embodiments of the invention are defined in the dependent claims.

### SUMMARY

The present invention provides a wireless communications device operable to "shuffle-play" complementary multi-media effects selected from a picklist. As used herein, the picklist means a list that comprises one or more complementary multi-media effects available to the wireless communications device. A complementary multi-media effect comprises, for example, audio files, ring tones, vibrator patterns, games, images, video sequences, and lighting patterns.

In one embodiment, the wireless communications device comprises a transceiver, memory, and a processor to control the one or more complementary multimedia effects. The processor is configured to play or activate a complementary multimedia effect selected from the picklist upon the receipt of a predetermined event. Thereafter, the processor is configured to automatically change the selected complementary multi-media effect to a new complementary multi-media effect, also selected from the picklist, and play or activate the new complementary multi-media effect upon receipt of a subsequent predetermined event. Selection of the complementary multi-media effect from the picklist occurs without intervention from the user.

### BRIEF DESCRIPTION OF THE DRAWINGS

Figure 1 illustrates a wireless communications device according to one embodiment of the present invention.
Figure 2 is a perspective view of a wireless communications device according to an alternate embodiment of the present invention.
Figure 3 illustrates a possible network configuration employed in one embodiment of the present invention.
Figure 4 illustrates one exemplary method of creating a picklist according to one embodiment of the present invention.
Figure 5A illustrates one exemplary method of one embodiment of the present invention.
Figure 5B illustrates another exemplary method of an alternate embodiment of the present invention.
Figure 6 illustrates yet another exemplary method of one embodiment of the present invention.

### DETAILED DESCRIPTION

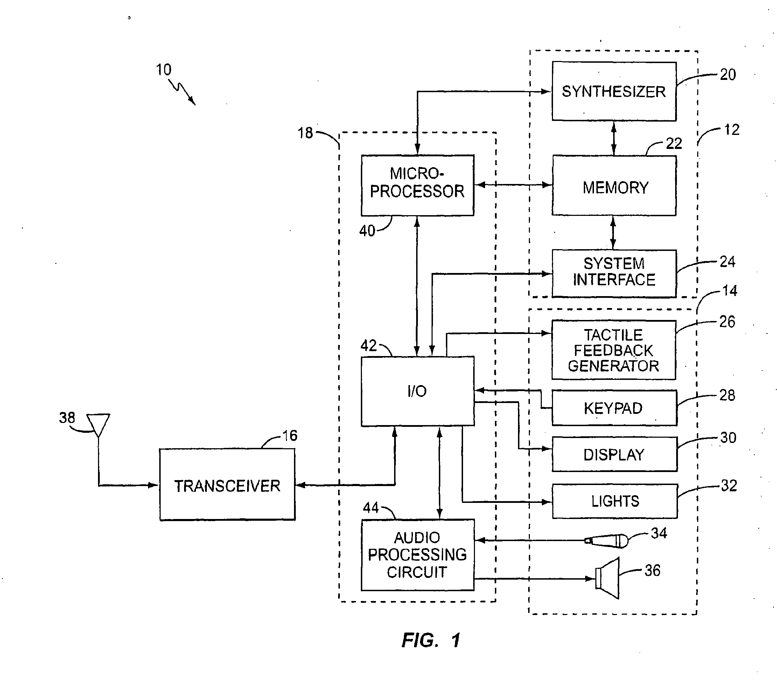

Referring now to Figure 1, a block diagram of wireless communications device according to one embodiment of the present invention is shown therein, and indicated generally by the number 10. Device 10 comprises circuitry 12, a user interface 14, transceiver 16, and control circuitry 18. As shown in the figures, device 10 embodies a cellular telephone. The present invention is not, however, limited to a cellular telephone but may be embodied in other communication devices. For example, the present invention also contemplates satellite telephones, personal communication services (PCS) devices, personal data assistants (PDAs), palm-top computers, and the like.

Circuitry 12 comprises a synthesizer 20, memory 22, and a system interface 24. Synthesizer 20 may be, for example, a Musical Instrument Digital interface (MIDI) synthesizer that synthesizes audio files for playback to a user of device 10. These audio files include, but are not limited to, polyphonic music used as ring tones. The information carried in the files may be information regarding a note to be played, when to change tones, volume, various instruments, and/or sounds to be played or synthesized, and how long to sustain a given note. Synthesizer 20, via built in hardware and/or software, reads these files and renders them as digital audio to the user.

Memory 22 represents the entire hierarchy of memory in device 10, including both random access memory (RAM) and read-only memory (ROM), and may be partitioned. Operating instructions and data required for operation of device 10 may be stored in a non-volatile partition accessible to the user. This portion of the memory, as will later be described, may also store picklists containing a list of one or more complementary multi-media effects available to device 10. Other information, such as temporary data and/or instructions, may be stored in a volatile or temporary partition that is not directly accessible to the user. Memory 22 includes devices such as EPROM, EEPROM, and/or flash memory, and may be implemented as a discrete device, stacked device, or integrated with microprocessor 40.

System interface 24 facilitates the inter-connection of device 10 with one or more peripheral devices, such as a battery charger, a hands-free headset, an external computing device, a digital video camera, or external memory. Through system interface 24, users may charge the battery of device 10, exchange data with external peripheral devices, and control the operation of the external peripheral devices. Typically, system interface 24 comprises a "female" type connector that receives "male" type connectors from system plugs. However, alternate embodiments contemplate system interface 24 as a "male" type connector that receives corresponding "female" type system plugs.

User interface 14 comprises a tactile generator 26, a keypad 28, a display 30, lights 32, a microphone 34, and a speaker 36. Tactile generator 26 comprises an electric motor and generates tactile signals that can be sensed by the user upon the receipt of an incoming call. Additionally, tactile generator 26 may also be activated responsive to an alert, or to the play of a game stored in memory 22 of device 10. The user may specify a variety of varying patterns for the tactile generator 26 to follow when activated.

Keypad 28 includes an alphanumeric keypad, and optionally, other navigation controls. Keypad 28 allows the operator to dial numbers, enter commands, play games, and select options from various menus stored in memory 22. Display 30 displays information to the user including dialed digits, incoming caller identification, images, video sequences, call status information, menu options, and other service information. Lights 32 provide visual indications to the user, and may comprise backlighting for keypad 28 or display 30, for example.

Microphone 34 converts the user's speech into electrical audio signals, while speaker 36 converts audio signals into audible sounds for the user. Microphone 34 and speaker 36 send and receive signals to/from transceiver 16 via audio processing circuit 44. Transceiver 16 is coupled to an antenna 38 and is a fully functional cellular radio transceiver that operates according to standards well known in the art, including Global System for Mobile Communications (GSM), TIA/EIA-136, cdmaOne, cdma2000, UMTS, and Wideband CDMA.

Control circuitry 18 interconnects circuitry 12, user interface 14, and transceiver 16, and controls the operation of device 10. Control circuitry 18 comprises a microprocessor 40, an input/output circuit 42, and an audio processing circuit 44. Microprocessor 40 may be implemented as one or more microprocessors, and may be any suitable processor known in the art. This includes general purpose and special purpose microprocessors, as well as digital signal processors (DSPs). Microprocessor 40 controls the operation of device 10 according to programs stored in memory 22, and generates control signals to control one or more complementary multi-media features, such as lights 32, tactile generator 26, and ring tones stored as audio files in memory 22. As will be described later, microprocessor 40 is configured to select a complementary multi-media effect from the picklist stored in memory 22.

Input/output circuit 42 interfaces microprocessor 40 with system interface 24, tactile generator 26, keypad 28, lights 30, audio processing circuit 44, and transceiver 16. Audio processing circuit 44 provides basic analog output signals to speaker 36 and accepts analog audio inputs from microphone 34. Thus, the user of device 10 may communicate to a remote party via transceiver 16, as well as hear ring tones rendered by Synthesizer 20, and other alerts or alarms.

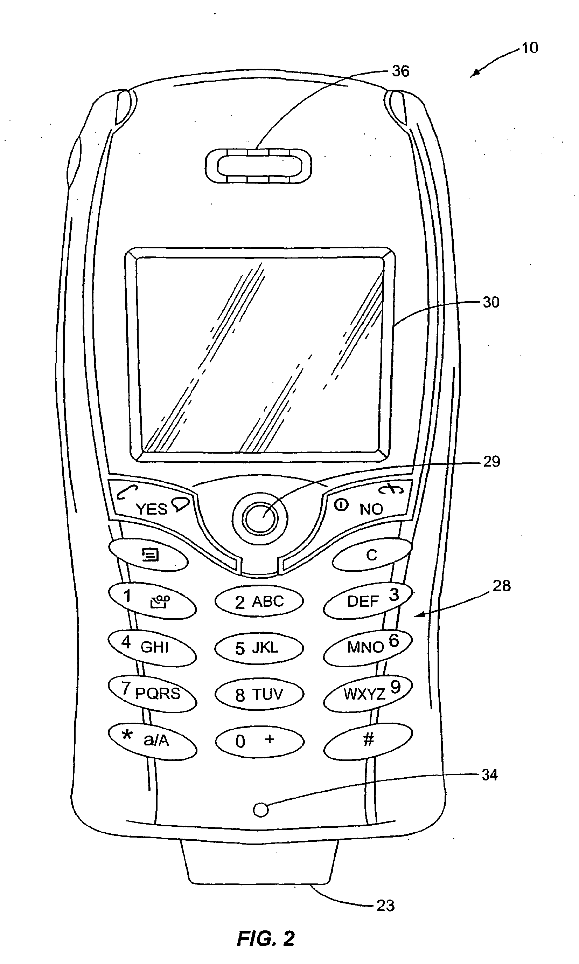

Figure 2 illustrates device 10 as a mobile telephone. In this embodiment, device 10. also includes a joystick 29 and external memory 23. Joystick 29 allows the user to navigate and select items from a variety of menus stored in memory 22. External memory 23 is a peripheral device that connects to system interface 24, and provides additional memory storage for device 10.

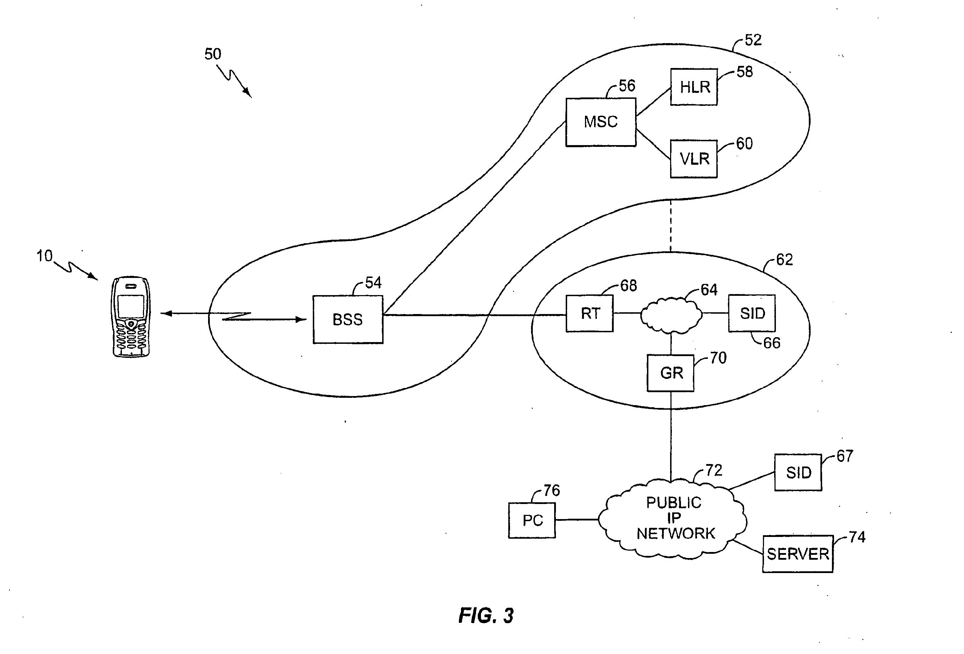

Figure 3 illustrates a possible network configuration in which device 10 may operate. Communications network 50 may comprise a wireless network 52, and an intermediate network 62. Wireless network 52 comprises a base station system (BSS) 54 having one or more base stations, a mobile service center (MSC) 56, a home location register (HLR) 58, and a visitors location register (VLR) 60. Other components may or may not exist depending upon the configuration of wireless network 52. The operation of wireless network 52 is well known in the art, and thus, is not discussed in any detail here. It is sufficient, however, to note that HLR 58 and VLR 60 may store one or more picklists in addition to their typical compliment of subscriber data.

Intermediate network 62 may be distinct from or integrated with wireless network 52, and includes a local area network 64, a subscriber database (SID) 66, a router 68, and a gateway 70. Local area network 64 represents any type of network known in the art capable of providing a communications pathway between wireless network 52, SID 66, router 68, and gateway 70. Like wireless network 52, the details of intermediate network 62 are well known and not discussed in any detail. It is sufficient to understand that picklists may be stored on SID 66.

Gateway 70 provides a connection to a server 74 and/or a PC 76 via a public IP network 72, for example, the Internet. This allows the user of device 10 to communicate with a remote party, as well as access data stored on SID 67, server 74, and/or PC 76. Like intermediate network 62, SID 67, server 74, and/or PC 76 may comprise subscriber data, such as picklists, that may be downloaded to device 10.

As previously stated, the present invention may "shuffle-play" a complementary multi-media effect without user intervention by playing or activating a complementary multi-media effect selected from a picklist. The selection order of the complementary multi-media effect from the picklist may be random, or predetermined. Once an effect is selected, the picklist may be "shuffled" or re-sequenced and another effect chosen. One or more picklists may be created and stored on device 10, or alternatively network 50, each containing a list of one or more complementary multi-media effects available to device 10. Shuffling the order of the complementary multi-media effects in the list helps to ensure diversity of selection.

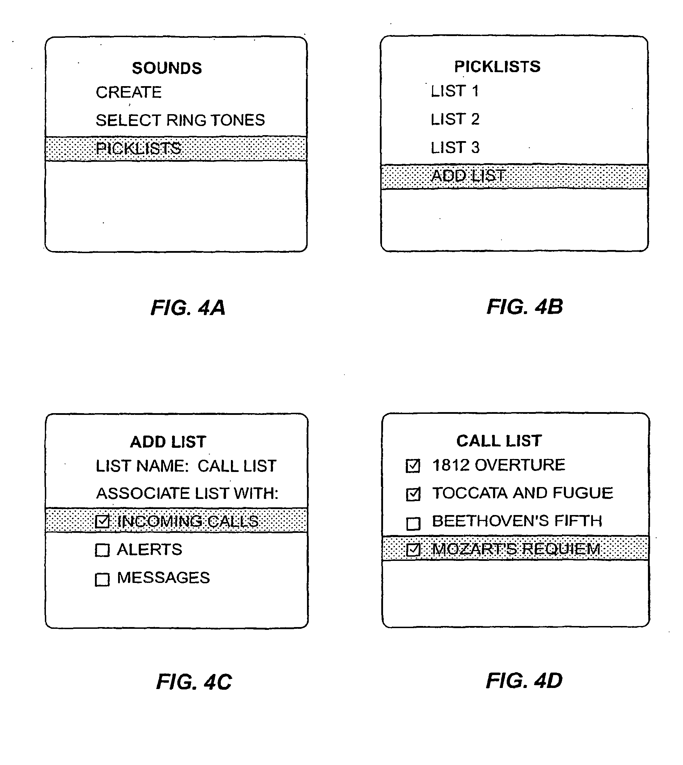

In one embodiment of the present invention, seen in Figures 4A-4D, the user may create the picklists directly on device 10 by manipulating joystick 29 or keypad 28 to navigate a menu system. In Figures 4A-4D, the user selects the "PICKLISTS" option to invoke a menu that lists one or more picklists. To edit or review an existing list, the user simply selects the name of the list to invoke a display containing all the effects assigned to that particular list. To create a new list, the user simply selects "ADD LIST" to invoke the Add List menu and enters a list name, which in this example is "Call List." The user then associates the picklist with a category of events that may occur. In Figure 4C, the user associates the picklist with incoming calls by selecting the "INCOMING CALLS" item. This invokes a list of available ring tones stored in memory 22 of device 10 from which the user may choose. The user then selects one or more of the available ring tones using joystick 29 or keypad 28. In Figure 4D, the user has selected "1812 OVERTURE," "TOCCATA AND FUGUE," and "MOZART'S REQUIEM" for inclusion into the picklist. The picklist is then stored in memory 22, or alternatively, external memory 23.

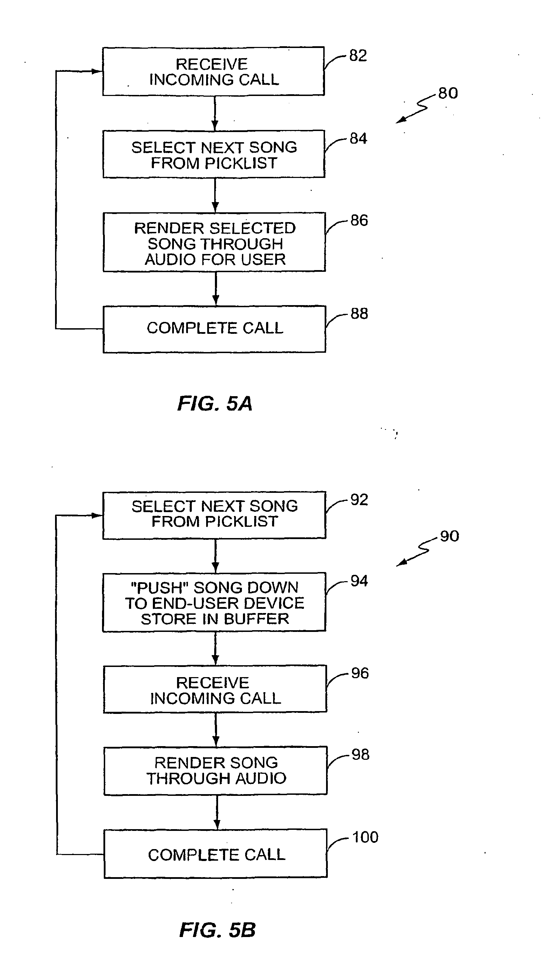

Figure 5A is a flow diagram of one possible method 80 of the present invention. Upon the receipt of a first incoming call (box 82), microprocessor 40 selects one of the ring tones from the "Call List," for example, "1812 OVERTURE," (box 84), and controls Synthesizer 20 to render the selected ring tone as audio through speaker 36. As stated above, microprocessor 40 may select the ring tone at random or in a predetermined order. The user answers the call and communicates with the remote party until completion (box 88). Upon receipt of a second incoming call (box 82), microprocessor 40 changes the selected ring tone from "1812 OVERTURE" to a new selected ring tone (box 84). This change is accomplished automatically by microprocessor 40 without intervention from the user. In this example, microprocessor 40 selects "MOZART'S REQUIEM," but may have just as easily selected "TOCCATA AND FUGUE." Synthesizer 20 then renders the new selected ring tone as audio through speaker 36.

As can be inferred from method 80, microprocessor 40 may change the ring tone to a new selected ring tone upon the receipt of each incoming call. The selection may be random, or it may be according to a predetermined order chosen by the user. Alternatively, however, the present invention may also change ring tones upon occurrence of other predetermined events as well. By way of example, the user may decide to change selected ring tones only upon receipt of every *n^{th}* call, such as every 5^{th}, or may decide to change ring tones only at predetermined times.

In an alternate embodiment of the present invention illustrated in Figure 5B, the picklists may be created by the user or a service provider, and stored on one or more of the components of network 50. In this method 90, the network entity, for example, HLR 58, VLR 60, SID 66, 67, or server 74, selects a ring tone from the picklist (box 92) designated as being associated with incoming calls. The network entity pushes the selected ring tone audio file to device 10, which subsequently stores the file in memory 22 or external memory 23 (box 94). Then, the network sends the incoming call to the user (box 96), Synthesizer 20 renders the selected ring tone as audio through speaker 36 (box 98), and the user completes the call (box 100). The network entity that selected the ring tone will then select a new ring tone and push it to device 10 upon receipt of a subsequent incoming call.

Storing the ring tone audio files on the network in this manner saves memory storage in device 10; however, sending the complete audio file may result in delaying call completion and use up bandwidth. To prevent this, the network entity may simply send an ID to device 10 that identifies the selected ring tone stored in memory 22 or 23.

Figures 4-5 illustrate the present invention using ring tones as a complementary multi-media effect. However, those skilled in the art will readily appreciate that this is merely for illustrative purposes, and the present invention actually contemplates creating picklists containing many different types of complementary multi-media effects. That is, the user may also create picklists that list vibrator patterns, lighting patterns, games, images, or video sequences, or any combination thereof, and associate each list with a group of events such as alerts, e-mail messages, text and/or voice messages, time, alarms, or pages. For example, a picklist could designate random background music and/or vibrating patterns to be activated at certain intervals of a gaming session. Various lighting patterns may be activated responsive to alerts or received messages. Microprocessor 40 in device 10 could further be configured to shuffle each of the items in the picklists after each selection or prior to each occurrence of a predetermined event.

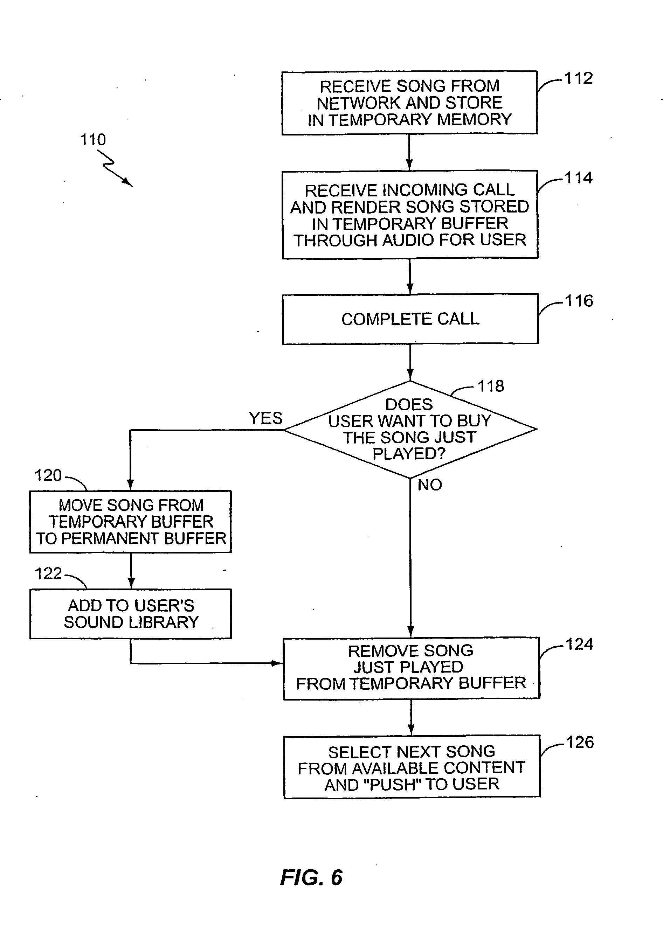

Another embodiment of the present invention is shown in Figure 6. This embodiment provides the user with a broader range of effects from which to choose, and generates a potential revenue stream for the operator(s) of network 50 and/or the components therein. In method 110 of Figure 6, device 10 receives an audio file representing a ring tone from the network 50, and stores it in a volatile partition in memory 22 or external memory 23 (box 112). The file may be selected from a picklist created by network operators and downloaded to device 10. Device 10 receives the incoming call, and microprocessor 40 signals Synthesizer 20 to render the file as audio through speaker 36 (box 114).

Once the call is complete (box 116) the user is provided with a choice to purchase the audio file just played (box 118). If the user chooses to purchase the file, microprocessor 40 moves the audio file from the volatile partition to the non-volatile partition (box 120), and adds the file to the user's sound library (box 122). The user may then return to the exemplary menu system in Figure 4 and add the purchased audio file to one or more picklists. Alternatively, if the user chooses not to purchase the file, microprocessor 40 removes the file from the volatile partition completely (box 124), and selects a new ring tone to push to the user.

The partitioning of memory 22 and/or external memory 23 may be done by the user, or may be pre-configured. That is, the user may decide how much memory should be dedicated to store "owned" complementary multi-media effects, and how much should be dedicated as temporary storage. Of course, the user would have very little, if any, control over the content stored in the temporary volatile partition to protect the interests of the network operators pushing the content to the user. However, the user would retain control over the non-volatile partition. Further, the audio files sent from the network may be sent to and stored in device 10 in advance of any incoming calls. This would prevent delays, as the downloaded audio file would already exist in device 10.

As those skilled in the art will understand, the embodiment of Figure 6 is not limited to the purchase of ring tones responsive to an incoming call, but may be extended to include the download and purchase of games or other complementary multimedia effects. The picklists created by the network operators may be targeted to users according to their preferences, and further, may be selected randomly, according to a predetermined order, or shuffled prior to/after each selection.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of selecting a multi-media effect for a wireless communications device (10) comprising:
partitioning memory in a wireless communications device (10) by a user of the device into a first partition and a second partition, the first and second partitions having user-defined sizes;
receiving an indication of a predetermined event from a wireless communications network (50);
receiving, along with the indication of the predetermined event, a multi-media effect selected from a picklist by an entity in the wireless communications network (50);
temporarily storing the multi-media effect received from the wireless communications network (50) in the first partition of memory in the wireless communications device (10);
rendering the multi-media effect at the wireless communications device (10) to notify the user of the predetermined event; and
if the user chooses to save the selected multi-media effect, moving the selected multi-media effect from the first partition to the second partition of memory in the wireless communications device (10).

2. The method of claim 1 further comprising removing the selected multi-media effect from the first partition if the user chooses not to save the selected multi-media effect.

3. The method of claim 1 further comprising receiving a new multi-media effect selected by the wireless communications network (50) along with an indication of a new predetermined event from the wireless communications network (50).

4. The method of claim 3 wherein the new multi-media effect is received on every n^{th} predetermined event, wherein n is greater than 0.

5. The method of claim 4 wherein the new multi-media effect is received at a predetermined time.

6. The method of claim 1 wherein the picklist is one of a plurality of picklists stored at the wireless communications network (50), and wherein each picklist is associated with a category of predetermined events.

7. The method of claim 6 wherein at least one of the one or more picklists comprises a list of audio files.

8. The method of claim 6 wherein at least one of the one or more picklists comprises a list of tactile function generator patterns.

9. The method of claim 6 wherein at least one of the one or more picklists comprises a list of lighting patterns.

10. The method of claim 6 wherein at least one of the one or more picklists comprises a list of images.

11. The method of claim 6 wherein at least one of the one or more picklists comprises a list of video sequences.

12. The method of claim 1 wherein the predetermined event comprises an incoming call.

13. The method of claim 1 wherein the predetermined event comprises an alarm.

14. The method of claim 1 wherein the predetermined event comprises a text message.

15. The method of claim 1 wherein the predetermined event comprises an e-mail message.

16. The method of claim 1 wherein the predetermined event comprises a new voice message.

17. The method of claim 1 wherein the predetermined event comprises a page.

18. The method of claim 1 further comprising receiving a combination of at least two multi-media effects selected by the wireless communications network (50), and receiving the combination of multi-media effects along with the indication of the predetermined event from the wireless communications network (50).

19. A wireless communications device (10) comprising:
a transceiver (16) configured to:
receive an indication of a predetermined event from a wireless communications network (50); and
receive, along with the indication of the predetermined event, a multi-media effect selected by the wireless communications network (50);
a memory partitioned into a first partition and a second partition by a user of the wireless communications device (10) to have user-defined sizes; and
a processor (40) configured to:
temporarily store the multi-media effect received from the network in the first partition of memory;
render the multi-media effect to notify the user of the wireless communications device (10) of the predetermined event; and
if the user of the wireless communications device (10) chooses to save the multimedia effect, move the multi-media effect from the first partition to the second partition.

20. The device of claim 19 wherein the processor is configured to remove the multimedia effect from the first partition if the user chooses not to save the new selected multi-media effect.

21. The device of claim 19 wherein the memory comprises a plug-in accessory that mates with a system interface connector on the wireless communications device (10).

22. A method of selecting a multi-media effect for a wireless communications device (10) comprising:
creating one or more picklists for storage at an entity in a wireless communications network (50), each picklist including one or more multi-media effects and being associated with a category of predetermined events;
selecting, by a network entity, a multi-media effect from a picklist that is associated with a predetermined event;
transmitting the selected multi-media effect along with an indication of the predetermined event to the wireless communications device (10);
sending the predetermined event to the wireless communications device (10); re-sequencing the activation order of the multi-media effects in the picklist;
selecting, at the wireless communications network (50), a new multi-media effect from the picklist that is associated with a subsequent predetermined event; and
transmitting the new selected multi-media effect and an indication of the subsequent predetermined event to the wireless communications device (10).

23. The method of claim 22 wherein selecting a multi-media effect comprises randomly selecting the multi-media effect from the picklist.

24. The method of claim 22 wherein selecting a multi-media effect comprises selecting the multi-media effect from the picklist according to a predetermined activation order.

25. The method of claim 22 wherein the activation order of the multi-media effects is re-sequenced on every n^{th} predetermined event, wherein n is greater than 0.

26. The method of claim 22 wherein the activation order of the multi-media effects is re-sequenced at a predetermined time.

27. The method of claim 22 wherein at least one of the one or more picklists comprises a list of audio files.

28. The method of claim 22 wherein at least one of the one or more picklists comprises a list of tactile function generator patterns.

29. The method of claim 22 wherein at least one of the one or more picklists comprises a list of lighting patterns.

30. The method of claim 22 wherein at least one of the one or more picklists comprises a list of images.

31. The method of claim 22 wherein at least one of the one or more picklists comprises a list of video sequences.

32. The method of claim 22 wherein the predetermined event comprises an incoming call.

33. The method of claim 22 wherein the predetermined event comprises an alarm.

34. The method of claim 22 wherein the predetermined event comprises a text message.

35. The method of claim 22 wherein the predetermined event comprises an e-mail message.

36. The method of claim 22 wherein the predetermined event comprises a new voice message.

37. The method of claim 22 wherein the predetermined event comprises a page.

38. The method of claim 22 further comprising selecting a combination of at least two multi-media effects at the wireless communications network (50), and transmitting the combination of at least two multi-media effects to the wireless communications device (10) along with the indication of the predetermined event.

## Patentansprüche

1. Verfahren zum Auswählen eines Multimedia-Effekts für eine Drahtloskommunikationsvorrichtung (10) mit:
Partitionieren eines Speichers in einer Drahtloskommunikationsvorrichtung (10) durch einen Benutzer der Vorrichtung in eine erste Partition und eine zweite Partition, wobei die erste und die zweite Partition Benutzer-definierte Größen haben;
Empfangen einer Angabe eines vorbestimmten Ereignisses von einem Drahtloskommunikationsnetzwerk (50);
Empfangen, zusammen mit der Angabe des vorbestimmten Ereignisses, eines Multimedia-Effekts, der aus einer Pickliste durch eine Einheit in dem Drahtloskommunikationsnetzwerk (50) ausgewählt ist;
temporärem Speichern des Multimedia-Effekts, der von dem Drahtloskommunikationsnetzwerk (50) empfangen ist, in der ersten Partition des Speichers in der Drahtloskommunikationsvorrichtung (10);
Wiedergeben des Multimedia-Effekts bei der Drahtloskommunikationsvorrichtung (10), um den Benutzer über das vorbestimmte Ereignis zu benachrichtigen; und
wenn der Benutzer wählt, den ausgewählten Multimedia-Effekt zu speichern, Bewegen des ausgewählten Multimedia-Effekts von der ersten Partition zu der zweiten Partition des Speichers in der Drahtloskommunikationsvorrichtung (10).

2. Verfahren von Anspruch 1 mit ferner einem Entfernen des ausgewählten Multimedia-Effekts von der ersten Partition, wenn der Benutzer wählt, den ausgewählten Multimedia-Effekt nicht zu speichern.

3. Verfahren von Anspruch 1 mit ferner einem Empfangen eines neuen Multimedia-Effekts, der durch das Drahtloskommunikationsnetzwerk (50) ausgewählt ist, zusammen mit einer Angabe eines neuen vorbestimmten Ereignisses von dem Drahtloskommunikationsnetzwerk (50).

4. Verfahren von Anspruch 3, wobei der neue Multimedia-Effekt bei jedem n-ten vorbestimmten Ereignis empfangen wird, wobei n größer als 0 ist.

5. Verfahren von Anspruch 4, wobei der neue Multimedia-Effekt zu einer vorbestimmten Zeit empfangen wird.

6. Verfahren von Anspruch 1, wobei die Pickliste eine von einer Vielzahl bei dem Drahtloskommunikationsnetzwerk (50) gespeicherter Picklisten ist, und wobei jede Pickliste mit einer Kategorie vorbestimmter Ereignisse verknüpft ist.

7. Verfahren von Anspruch 6, wobei wenigstens eine von der einen oder den mehreren Picklisten eine Liste von Audiodateien umfasst.

8. Verfahren von Anspruch 6, wobei wenigstens eine von der einen oder den mehreren Picklisten eine Liste von Tastfunktions-Generatormustern umfasst.

9. Verfahren von Anspruch 6, wobei wenigstens eine von der einen oder den mehreren Picklisten eine Liste von Beleuchtungsmustern umfasst.

10. Verfahren von Anspruch 6, wobei wenigstens eine von der einen oder den mehreren Picklisten eine Liste von Bildern umfasst.

11. Verfahren von Anspruch 6, wobei wenigstens eine von der einen oder den mehreren Picklisten eine Liste von Videosequenzen umfasst.

12. Verfahren von Anspruch 1, wobei das vorbestimmte Ereignis einen ankommenden Anruf umfasst.

13. Verfahren von Anspruch 1, wobei das vorbestimmte Ereignis einen Alarm umfasst.

14. Verfahren von Anspruch 1, wobei das vorbestimmte Ereignis eine Textnachricht umfasst.

15. Verfahren von Anspruch 1, wobei das vorbestimmte Ereignis eine e-Mail-Nachricht umfasst.

16. Verfahren von Anspruch 1, wobei das vorbestimmte Ereignis eine neue Sprachnachricht umfasst.

17. Verfahren von Anspruch 1, wobei das vorbestimmte Ereignis eine Seite umfasst.

18. Verfahren von Anspruch 1 mit ferner einem Empfangen einer Kombination von wenigstens zwei durch das Drahtloskommunikationsnetzwerk (50) ausgewählten Multimedia-Effekten und einem Empfangen der Kombination der Multimedia-Effekte zusammen mit der Angabe des vorbestimmten Ereignisses von dem Drahtloskommunikationsnetzwerk (50).

19. Drahtloskommunikationsvorrichtung (10) mit:
einem Transceiver (16), der ausgebildet ist zum:
Empfangen einer Angabe eines vorbestimmten Ereignisses von einem Drahtloskommunikationsnetzwerk (50); und
Empfangen, zusammen mit der Angabe des vorbestimmten Ereignisses, eines durch das Drahtloskommunikationsnetzwerk (50) ausgewählten Multimedia-Effekts;
einem Speicher, der durch einen Benutzer der Drahtloskommunikationsvorrichtung (10) in eine erste Partition und eine zweite Partition partitioniert ist, um Benutzer-definierte Größen zu haben und
einem Prozessor (40), der ausgebildet ist zum:
temporären Speichern des von dem Netzwerk empfangenen Multimedia-Effekts in der ersten Partition des Speichers;
Wiedergeben des Multimedia-Effekts, um den Benutzer der Drahtloskommunikationsvorrichtung (10) über das vorbestimmte Ereignis zu benachrichtigen; und
wenn der Benutzer der Drahtloskommunikationsvorrichtung (10) wählt, den Multimedia-Effekt zu speichern, Bewegen des Multimedia-Effekts von der ersten Partition zu der zweiten Partition.

20. Vorrichtung von Anspruch 19, wobei der Prozessor ausgebildet ist zum Entfernen des Multimedia-Effekts von der ersten Partition, wenn der Benutzer wählt, den neuen ausgewählten Multimedia-Effekt nicht zu speichern.

21. Vorrichtung von Anspruch 19, wobei der Speicher ein Einsteck-Zubehörteil umfasst, das mit einem Systemschnittstellenverbinder auf der Drahtloskommunikationsvorrichtung (10) ineinander greift.

22. Verfahren zum Auswählen eines Multimedia-Effekts für eine Drahtloskommunikationsvorrichtung (10) mit:
Erschaffen einer oder mehrerer Picklisten zur Speicherung bei einer Einheit in einem Drahtloskommunikationsnetzwerk (50), wobei jede Pickliste einen oder mehrere Multimedia-Effekte enthält und mit einer Kategorie vorbestimmter Ereignisse verknüpft ist;
Auswählen, durch eine Netzwerkeinheit, eines Multimedia-Effekts aus einer Pickliste, die mit einem vorbestimmten Ereignis verknüpft ist;
Übertragen des ausgewählten Multimedia-Effekts zusammen mit einer Angabe des vorbestimmten Ereignisses an die Drahtloskommunikationsvorrichtung (10);
Senden des vorbestimmten Ereignisses an die Drahtloskommunikationsvorrichtung (10);
Reihenfolgenwiederherstellung der Aktivierungsreihenfolge der Multimedia-Effekte in der Pickliste;
Auswählen, bei dem Drahtloskommunikationsnetzwerk (50), eines neuen Multimedia-Effekts aus der Pickliste, die mit einem nachfolgenden vorbestimmten Ereignis verknüpft ist; und
Übertragen des neuen ausgewählten Multimedia-Effekts und einer Angabe des nachfolgenden vorbestimmten Ereignisses an die Drahtloskommunikationsvorrichtung (10) .

23. Verfahren von Anspruch 22, wobei das Auswählen eines Multimedia-Effekts ein zufälliges Auswählen des Multimedia-Effekts aus der Pickliste umfasst.

24. Verfahren von Anspruch 22, wobei das Auswählen eines Multimedia-Effekts ein Auswählen des Multimedia-Effekts aus der Pickliste gemäß einer vorbestimmten Aktivierungsreihenfolge umfasst.

25. Verfahren von Anspruch 22, wobei die Aktivierungsreihenfolge der Multimedia-Effekte bei jedem n-ten vorbestimmten Ereignis wiederhergestellt wird, wobei n größer als 0 ist.

26. Verfahren von Anspruch 22, wobei die Aktivierungsreihenfolge der Multimedia-Effekte zu einer vorbestimmten Zeit wiederhergestellt wird.

27. Verfahren von Anspruch 22, wobei wenigstens eine von der einen oder den mehreren Picklisten eine Liste von Audiodateien umfasst.

28. Verfahren von Anspruch 22, wobei wenigstens eine von der einen oder den mehreren Picklisten eine Liste von Tastfunktions-Generatormustern umfasst.

29. Verfahren von Anspruch 22, wobei wenigstens eine von der einen oder den mehreren Picklisten eine Liste von Beleuchtungsmustern umfasst.

30. Verfahren von Anspruch 22, wobei wenigstens eines von der einen oder den mehreren Picklisten eine Liste von Bildern umfasst.

31. Verfahren von Anspruch 22, wobei wenigstens eine von der einen oder den mehreren Picklisten eine Liste von Videosequenzen umfasst.

32. Verfahren von Anspruch 22, wobei das vorbestimmte Ereignis einen ankommenden Anruf umfasst.

33. Verfahren von Anspruch 22, wobei das vorbestimmte Ereignis einen Alarm umfasst.

34. Verfahren von Anspruch 22, wobei das vorbestimmte Ereignis eine Textnachricht umfasst.

35. Verfahren von Anspruch 22, wobei das vorbestimmte Ereignis eine e-Mail-Nachricht umfasst.

36. Verfahren von Anspruch 22, wobei das vorbestimmte Ereignis eine neue Sprachnachricht umfasst.

37. Verfahren von Anspruch 22, wobei das vorbestimmte Ereignis eine Seite umfasst.

38. Verfahren von Anspruch 22 mit ferner einem Auswählen einer Kombination von wenigstens zwei Multimedia-Effekten bei dem Drahtloskommunikationsnetzwerk (50) und einem Übertragen der Kombination der wenigstens zwei Multimedia-Effekte an die Drahtloskommunikationsvorrichtung (10) zusammen mit der Angabe des vorbestimmten Ereignisses.

## Revendications

1. Procédé de sélection d'un effet multimédia pour un dispositif de communications sans fil (10) comprenant
la partition d'une mémoire dans un dispositif de communications sans fil (10) par un utilisateur du dispositif en une première partition et une deuxième partition, la première et la deuxième partitions ayant des tailles définies par l'utilisateur;
la réception d'une indication d'un événement prédéterminé à partir d'un réseau de communications sans fil (50);
la réception, avec l'indication de l'événement prédéterminé, d'un effet multimédia sélectionné à partir d'une liste de sélection par une entité dans le réseau de communications sans fil (50);
le stockage temporaire de l'effet multimédia reçu à partir du réseau de communications sans fil (50) dans la première partition de mémoire dans le dispositif de communications sans fil (10);
le rendu de l'effet multimédia au dispositif de communications sans fil (10) pour informer l'utilisateur de l'événement prédéterminé; et
si l'utilisateur opte pour la sauvegarde de l'effet multimédia sélectionné, le transfert de l'effet multimédia sélectionné de la première partition à la deuxième partition de mémoire dans le dispositif de communications sans fil (10).

2. Procédé de la revendication 1 comprenant en plus le retrait de l'effet multimédia sélectionné de la première partition si l'utilisateur choisit de ne pas sauvegarder l'effet multimédia sélectionné.

3. Procédé de la revendication 1 comprenant en plus la réception d'un nouvel effet multimédia sélectionné par le réseau de communications sans fil (50) avec une indication d'un nouvel événement prédéterminé depuis le réseau de communications sans fil (50).

4. Procédé de la revendication 3 dans lequel le nouvel effet multimédia est reçu à chaque n^{ième} événement prédéterminé, où n est supérieur à 0.

5. Procédé de la revendication 4 dans lequel le nouvel effet multimédia est reçu à un moment prédéterminé.

6. Procédé de la revendication 1 dans lequel la liste de sélection est l'une d'une pluralité de listes de sélection stockées dans le réseau de communications sans fil (50), et où chaque liste de sélection est associée à une catégorie d'événements prédéterminés.

7. Procédé de la revendication 6 dans lequel au moins l'une de la liste de sélection ou de plusieurs listes de sélection comprend une liste de fichiers audio.

8. Procédé de la revendication 6 dans lequel au moins l'une de la liste de sélection ou de plusieurs listes de sélection comprend une liste de modèles de générateurs de fonction tactile.

9. Procédé de la revendication 6 dans lequel au moins l'une de la liste de sélection ou de plusieurs listes de sélection comprend une liste de modèles d'éclairage.

10. Procédé de la revendication 6 dans lequel au moins l'une de la liste de sélection ou de plusieurs listes de sélection comprend une liste d'images.

11. Procédé de la revendication 6 dans lequel au moins l'une de la liste de sélection ou de plusieurs listes de sélection comprend une liste de séquences vidéo.

12. Procédé de la revendication 1 dans lequel l'événement prédéterminé comprend un appel entrant.

13. Procédé de la revendication 1 dans lequel l'événement prédéterminé comprend une alarme.

14. Procédé de la revendication 1 dans lequel l'événement prédéterminé comprend un message textuel.

15. Procédé de la revendication 1 dans lequel l'événement prédéterminé comprend un courriel.

16. Procédé de la revendication 1 dans lequel l'événement prédéterminé comprend un nouveau message vocal.

17. Procédé de la revendication 1 dans lequel l'événement prédéterminé comprend un téléavertissement.

18. Procédé de la revendication 1 comprenant en plus la réception d'une combinaison d'au moins deux effets multimédia sélectionnés par le réseau de communications sans fil (50), et la réception de la combinaison d'effets multimédia avec l'indication de l'événement prédéterminé à partir du réseau de communications sans fil (50).

19. Dispositif de communications sans fil (10) comprenant :
un émetteur-récepteur (16) configuré pour :
recevoir une indication d'un événement prédéterminé à partir d'un réseau de communications sans fil (50); et
recevoir, avec l'indication de l'événement prédéterminé, un effet multimédia sélectionné par le réseau de communications sans fil (50) ;
une mémoire divisée en une première partition et une deuxième partition par un utilisateur du dispositif de communications sans fil (10) pour avoir des tailles définies par l'utilisateur ; et
un processeur (40) configuré pour :
stocker temporairement l'effet multimédia reçu à partir du réseau dans la première partition de mémoire;
rendre l'effet multimédia pour informer l'utilisateur du dispositif de communications sans fil (10) de l'événement prédéterminé; et
si l'utilisateur du dispositif de communications sans fil (10) choisit de sauvegarder l'effet multimédia, transférer l'effet multimédia de la première partition à la deuxième partition.

20. Dispositif de la revendication 19 dans lequel le processeur est configuré pour retirer l'effet multimédia de la première partition si l'utilisateur choisit de ne pas sauvegarder le nouvel effet multimédia sélectionné.

21. Dispositif de la revendication 19 dans lequel la mémoire comprend un accessoire enfichable qui s'accouple à un connecteur d'interface système sur le dispositif de communications sans fil (10).

22. Procédé de sélection d'un effet multimédia pour un dispositif de communications sans fil (10) comprenant :
la création d'une ou de plusieurs listes de sélection pour le stockage à une entité dans un réseau de communications sans fil (50), chaque liste de sélection incluant un ou plusieurs effets multimédia et étant associée à une catégorie d'événements prédéterminés
la sélection, par une entité réseau, d'un effet multimédia à partir d'une liste de sélection qui est associée à un événement prédéterminé;
l'émission de l'effet multimédia sélectionné avec une indication de l'événement prédéterminé au dispositif de communications sans fil (10);
l'envoi de l'événement prédéterminé au dispositif de communications sans fil (10) ;
le ré-ordonnancement de l'ordre d'activation des effets multimédia dans la liste de sélection;
la sélection, au réseau de communications sans fil (50), d'un nouvel effet multimédia à partir de la liste de sélection qui est associée à un événement prédéterminé subséquent; et
l'émission du nouvel effet multimédia sélectionné et d'une indication de l'événement prédéterminé subséquent au dispositif de communications sans fil (10).

23. Procédé de la revendication 22 dans lequel la sélection d'un effet multimédia comprend la sélection aléatoire de l'effet multimédia à partir de la liste de sélection.

24. Procédé de la revendication 22 dans lequel la sélection d'un effet multimédia comprend la sélection de l'effet multimédia à partir de la liste de sélection selon un ordre d'activation prédéterminé.

25. Procédé de la revendication 22 dans lequel l'ordre d'activation des effets multimédia est réordonnancé à chaque n^{ième} événement prédéterminé, où n est supérieur à 0.

26. Procédé de la revendication 22 dans lequel l'ordre d'activation des effets multimédia est réordonnancé à un moment prédéterminé.

27. Procédé de la revendication 22 dans lequel au moins l'une de la liste de sélection ou de plusieurs listes de sélection comprend une liste de fichiers audio.

28. Procédé de la revendication 22 dans lequel au moins l'une de la liste de sélection ou de plusieurs listes de sélection comprend une liste de modèles de générateurs de fonction tactile.

29. Procédé de la revendication 22 dans lequel au moins l'une de la liste de sélection ou de plusieurs listes de sélection comprend une liste de modèles d'éclairage.

30. Procédé de la revendication 22 dans lequel au moins l'une de la liste de sélection ou de plusieurs listes de sélection comprend une liste d'images.

31. Procédé de la revendication 22 dans lequel au moins l'une de la liste de sélection ou de plusieurs listes de sélection comprend une liste de séquences vidéo.

32. Procédé de la revendication 22 dans lequel l'événement prédéterminé comprend un appel entrant.

33. Procédé de la revendication 22 dans lequel l'événement prédéterminé comprend une alarme.

34. Procédé de la revendication 22 dans lequel l'événement prédéterminé comprend un message textuel.

35. Procédé de la revendication 22 dans lequel l'événement prédéterminé comprend un courriel.

36. Procédé de la revendication 22 dans lequel l'événement prédéterminé comprend un nouveau message vocal.

37. Procédé de la revendication 22 dans lequel l'événement prédéterminé comprend un téléavertissement.

38. Procédé de la revendication 22 comprenant en plus la sélection d'une combinaison d'au moins deux effets multimédia au réseau de communications sans fil (50), et l'émission de la combinaison d'au moins deux effets multimédia au dispositif de communications sans fil (10) avec l'indication de l'événement prédéterminé.
